# EUROPEAN PATENT APPLICATION

(11) **EP 2 578 983 A1**
(43) Date of publication of application: **10.04.2013**
(21) Application number: 11786311.8
(22) Date of filing: 23.05.2011
(51) Int. Cl.: F28F 19/06, B21C 23/10, B21C 25/02, F28F 1/16

(54) **MULTI-LAYERED HEAT TRANSFER TUBE, PROCESS FOR PRODUCTION OF MULTI-LAYERED HEAT TRANSFER TUBE, AND MOLDING JIG FOR USE IN THE PROCESS**

(30) Priority: 24.05.2010 JP 2010118615
(71) Applicant: Kabushiki Kaisha Kobe Seiko Sho, Chuo-ku Kobe-shi Hyogo 651-8585 (JP)
(72) Inventor: SAKAE, Akira, Kobe-shi, Hyogo 651-2271 (JP); TOYOTAKE, Kotaro, Kitakyushu-shi, Fukuoka 800-0007 (JP)
(74) Representative: Müller-Boré & Partner Patentanwälte
(86) International application number: PCT/JP2011/002848
(87) International publication number: WO 2011/148608

(57) **Abstract**

A multi-layered heat transfer tube for use in a carburetor for a liquefied gas, comprising an inner tube which is equipped with a passage through which a liquefied gas can pass and an outer tube which covers the outer peripheral surface of the inner tube, wherein each of the inner tube and the outer tube has multiple fins that extend in the direction of the length of the multi-layered heat transfer tube and are arranged along the direction of the circumference of the multi-layered heat transfer tube, at least the outer tube is composed of a fully dense material, and the outer tube covers the entire outer surface of the inner tube and is bound to the inner tube via a metallic bond.

## Description

### Technical Field

The present invention relates, for example, to a multi-layered heat transfer tube used in an open rack liquefied natural gas vaporizer, a manufacturing method of a multi-layered heat transfer tube, and a forming device used in the manufacturing method.

### Background Art

For example, fuel such as natural gas used in thermal power stations or the like is liquefied under low temperature and high pressure, and is transported or stored as liquefied natural gas (LNG). Such liquefied natural gas is vaporized into natural gas (NG) before use. LNG boils and vaporizes into NG at about -160°C. Usually, an open rack vaporizer (hereinafter referred to as ORV) is used in the vaporization of LNG.

The ORV is a kind of heat exchanger, and heats and vaporizes low-temperature liquefied natural gas by heat exchange using mainly seawater. The ORV has a plurality of heat exchange panels having a plurality of fin tubes. Each heat exchange panel is formed by arranging in parallel a plurality of fin tubes (heat transfer tubes) having a length of several meters. Each fin tube has a plurality of protruding fins that extend in the longitudinal direction of the fin tube and are arranged in the circumferential direction of the fin tube. Each heat exchange panel has at the upper end thereof an NG header that takes out NG from each fin tube, and has at the lower end thereof an LNG header that supplies LNG to each fin tube. In the ORV, the plurality of heat exchange panels are each arranged vertically. A seawater header that supplies seawater serving as a heat carrier is provided above each heat exchange panel. Seawater supplied from the seawater header flows down along the surfaces of fin tubes of the heat exchange panel.

In the ORV configured as above, LNG is supplied to each fin tube from the LNG header provided at the lower end of each heat exchange panel, and seawater is supplied from the seawater header above each heat exchange panel and flows down along the surface of each fin tube. As LNG moves upward through each fin tube, LNG is heated and vaporized by seawater serving as a heat carrier. The vaporized natural gas is supplied to the outside as NG (natural gas) through the NG header provided at the upper end of each heat exchange panel.

The fin tubes used in the above ORV are often formed of aluminum alloy having good thermal conductivity. However, in general, seawater is used as a heat carrier of the ORV For this reason, in fin tubes formed of aluminum alloy, eating-away called erosion (mechanical eating away) or corrosion (chemical eating away) is caused by contact with seawater.

To solve this problem, a heat transfer tube on the surface of which a sacrificial anode coating layer is formed by thermal spraying is disclosed in Patent Literature 1. The sacrificial anode coating layer formed by thermal spraying has eating-away resistance, sand erosion resistance, and erosion-corrosion resistance.

As described above, the open rack vaporizer (ORV) is exposed to seawater. For this reason, it is important to improve the resistance to erosion and corrosion of fin tubes (heat transfer tubes) of the ORV to facilitate the maintenance and management of LNG vaporization plants.

In the heat transfer tube of Patent Literature 1, a sacrificial anode coating of aluminum alloy or the like is formed by thermal spraying on the surface of a base material. However, because the sacrificial anode coating formed by thermal spraying is weakly bonded to the base material, it is difficult to significantly improve the eating-away resistance.

### Citation List

### Patent Literature

PTL 1: Japanese Unexamined Patent Application Publication No. 2005-265393

### Summary of Invention

It is an object of the present invention to provide a multi-layered heat transfer tube (fin tube) that is used in an open rack vaporizer (ORV) and in which the entire circumference of a base material is coated by a sacrificial anode coating and that has improved eating-away resistance against seawater (heat carrier).

According to an aspect of the present invention, a multi-layered heat transfer tube used in a liquefied gas vaporizer includes an inner tube having a flow path through which liquefied gas flows, and an outer tube covering the outer peripheral surface of the inner tube. The inner tube and the outer tube have a plurality of fins extending in the longitudinal direction of the multi-layered heat transfer tube and arranged in the circumferential direction of the multi-layered heat transfer tube, at least the outer tube is formed of a fully dense material, and the outer tube covers the entire outer surface of the inner tube and is metallically bonded to the inner tube.

### Brief Description of Drawings

[FIG. 1] FIG. 1 is a perspective view schematically showing an open rack vaporizer according to a first embodiment of the present invention.
[FIG. 2] FIG. 2 (a) is a sectional view of a multi-layered fin tube according to the first embodiment of the present invention taken along a plane perpendicular to the axis, and FIG. 2 (b) is a perspective view of the multi-layered fin tube.
[FIG. 3] FIG. 3 is a diagram showing the outline of a manufacturing method of a multi-layered fin tube according to a second embodiment of the present invention.
[FIG. 4] FIG. 4 (a) is a perspective view of a forming device used in the manufacturing method of a multi-layered fin tube according to the second embodiment of the present invention viewed from the approach surface side, FIG. 4 (b) is a sectional side elevation of the forming device, and FIG. 4 (c) is a diagram showing the surface on the opposite side of the approach surface in the forming device.
[FIG. 5] FIG. 5 shows the configuration of a multi-layered fin tube according to a third embodiment of the present invention, FIG. 5 (a) is a sectional view of the multi-layered fin tube taken along a plane perpendicular to the axis, and FIG. 5 (b) is a perspective view of the multi-layered fin tube.
[FIG. 6] FIG. 6 (a) is a perspective view of a forming device used in a manufacturing method of a multi-layered fin tube according to a fourth embodiment of the present invention viewed from the approach surface side, FIG. 6 (b) is a sectional side elevation of the forming device, and FIG. 6 (c) is a diagram showing the surface on the opposite side of the approach surface in the forming device.

### Description of Embodiments

Embodiments of the present invention will be described below with reference to the drawings.

### (First embodiment)

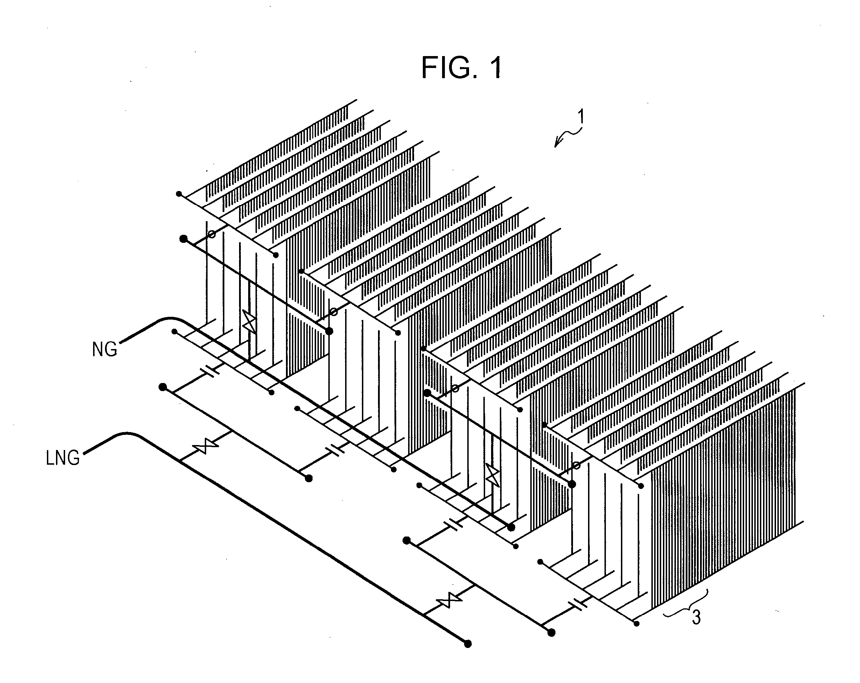

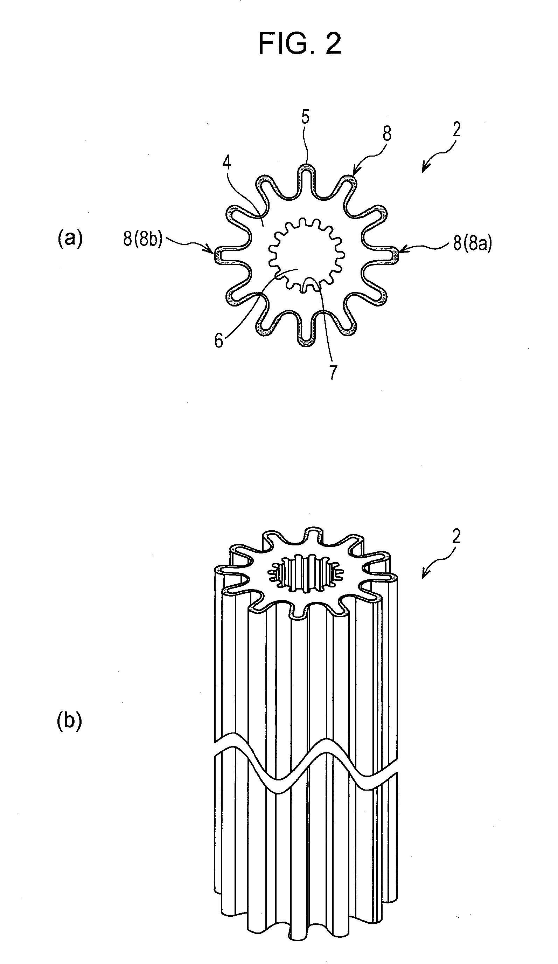

A multi-layered heat transfer tube according to a first embodiment of the present invention will be described with reference to FIG. 1 and FIG. 2. FIG. 1 is a perspective view schematically showing an open rack vaporizer (ORV) that vaporizes liquefied natural gas (LNG). FIG. 2 (a) and FIG. 2 (b) are diagrams showing the configuration of a multi-layered heat transfer tube in the ORV.

The ORV 1 shown in FIG. 1 is a kind of heat exchanger, and heats and vaporizes low-temperature LNG by heat exchange using mainly seawater. The ORV1 has a plurality of heat exchange panels 3. Each heat exchange panel 3 has a plurality of multi-layered fin tubes (multi-layered heat transfer tubes) 2 that are arranged in parallel. Each multi-layered fin tube 2 has the same length (for example, 4 to 6), and has a plurality of protruding fins that extend in the longitudinal direction of the multi-layered fin tube 2 and are arranged in the circumferential direction of the multi-layered fin tube 2.

Each heat exchange panel 3 formed as above has at the upper end thereof an NG header that takes out gaseous natural gas (NG) from each multi-layered fin tube 2, and has at the lower end thereof an LNG header that supplies LNG to each multi-layered fin tube 2. In the ORV1, the plurality of heat exchange panels 3 configured as above are arranged vertically and parallel to each other, and a seawater header (not shown) that supplies seawater serving as a heat carrier is provided above each heat exchange panel 3.

In the ORV1 configured as above, LNG is supplied from the LNG header provided at the lower end of each heat exchange panel 3, and seawater supplied from the seawater header above each heat exchange panel 3 flows down along the surface of each fin tube. As LNG moves upward through each fin tube, LNG is heated and vaporized by seawater serving as a heat carrier. The vaporized natural gas is supplied to the outside as NG (natural gas) through the NG header provided at the upper end of each heat exchange panel 3.

Next, a multi-layered fin tube (multi-layered heat transfer tube) 2 used in a heat exchange panel 3 forming the ORV1 will be described in detail with reference to FIG. 2 (a) and FIG. 2 (b). FIG. 2 (a) is a sectional view of the multi-layered fin tube 2 taken along a plane perpendicular to the axis, and FIG. 2 (b) is a perspective view showing the multi-layered fin tube 2.

As shown in FIG. 2 (b), the multi-layered fin tube 2 is a substantially cylindrical hollow tube having a length, for example, of 4 to 6 m, and has a substantially cylindrical inner tube 4 as a base material that forms the main body of the multi-layered fin tube 2, and an outer tube 5 as a coating material that coats the entire outer peripheral surface of the inner tube 4. The inner tube 4 is formed, for example, of metallic aluminum that is a fully dense material, and the outer tube 5 is formed of aluminum alloy that is a fully dense material and contains several percent (for example, at least 1% but no more than 5%) zinc. The outer tube 5 is metallically bonded to the outer peripheral surface of the inner tube 4, thereby coating the inner tube 4.

Here, fully dense material is a solid material without voids such as pores. Here, it includes a material having a relative density of 99% or more (relative density is the actual density measured using Archimedes' principle divided by the real density).

The through-hole 6 in the inner tube 4 functions as a flow path of LNG gas. The through-hole 6 is formed in the vicinity of the axis position of the inner tube 4 substantially linearly along the axis from one end to the other end of the inner tube 4, and forms openings in both end faces of the inner tube 4.

In the inner peripheral surface of the inner tube 4 forming the through-hole 6, a plurality of substantially linear U-shaped grooves 7 having a predetermined width and depth are formed so as to be arranged at regular intervals in the circumferential direction. Each groove 7 is formed from one end to the other end of the through-hole 6 along the axis of the inner tube 4. In the multi-layered fin tube 2 shown in FIG. 2 (b), for example, 15 grooves 7 are formed in the inner peripheral surface of the inner tube 4. If the recessed grooves 7 formed are considered as recessed stripes, it can be said that a protruding stripe is formed between each adjacent pair of grooves 7. The height direction and the depth direction of the protruding stripes and the recessed stripes are substantially the same as the radial direction of the inner tube 4 (or the through-hole 6), and the number of the protruding stripes is equal to the number of the recessed stripes.

As described above, in the inner peripheral surface of the inner tube 4, protruding stripes and recessed stripes are formed alternately so as to be parallel to each other. Since protrusions and recesses exist alternately in the circumference direction of the through-hole 6, the surface area of the inner peripheral surface of the inner tube 4 is large compared to a case where there are no recesses and protrusions.

Predetermined parts on the outer peripheral surface side of the inner tube 4 form, in cooperation with the outer tube 5, a plurality of protruding fins 8 (hereinafter simply referred to as fins 8) that function as heat absorbing plates.

The fins 8, which each have substantially the same thickness and height, are formed along the longitudinal direction of the inner tube 4 from one end to the other end of the inner tube 4 substantially linearly. The fins 8 formed as above are disposed at regular intervals in the circumferential direction on the outer peripheral surface side of the multi-layered fin tube 2.

Thus, between each adjacent pair of fins 8, a U-shaped valley portion is formed from one end to the other end of the inner tube 4 substantially linearly. The height direction of the fins 8 is substantially the same as the radial direction of the inner tube 4 and is also substantially the same as the radial direction of the above-described through-hole 6. In the multi-layered fin tube 2 shown in FIG. 2 (b), for example, 12 fins 8 are formed, and arranged such that two fins 8 face each other in the radial direction. In this case, since the number of fins 8 is 12, the number of valley portions is also 12.

The plurality of fins 8 formed as above are arranged radially along the radial direction of the inner tube 4. The nearer the axis of the inner tube 4, the smaller the distance between each adjacent pair of fins 8. The farther from the axis of the inner tube 4, the larger the distance between each adjacent pair of fins 8. By changing the distance between each adjacent pair of fins 8 as above, heat can be absorbed from seawater effectively through the fins 8.

The arrangement of the fins 8 is not limited to the above radial arrangement. The thickness of the inner tube 4 is large so that the thickness from the inner peripheral surface to the valley portions in the inner tube 4 is substantially equal to the height of the fins 8, the distance from the apex portions of the fins 8 to the valley portions.

The shape of the distal ends (apex portions) of the fins 8 is not limited. With reference to FIG. 2 (a) and FIG. 2 (b), the distal ends of a pair of fins 8a and 8b facing each other in the radial direction of the inner tube 4 are flat, and the distal ends of the other fins 8 are rounded in an inverted U-shape. The purpose of this is to join adjacent multi-layered fin tubes 2, 2 to each other by joining the fin 8a and the fin 8b when a plurality of multi-layered fin tubes 2 are arranged to form a heat exchange panel 3. That is to say, the distal end of the fin 8a of one multi-layered fin tube 2 is joined to the distal end of the fin 8b of the other multi-layered fin tube 2.

Although the fins 8 have such a distal end shape in this embodiment, the distal end shape is not limited to this. For example, the distal end shape of the fins 8 may be a triangular shape that is acute outwardly in the radial direction in a section perpendicular to the axis of the multi-layered fin tube 2, or may be a shape that is recessed inwardly in the radial direction in the above section.

Next, the outer tube 5 will be described. The outer tube 5 is a member in contact with seawater serving as a heat carrier in the ORV1. The outer tube 5 serves as a sacrificial anode coating, and is formed, for example, of aluminum alloy that contains several percent (for example, 1 to 5%) zinc. That is to say, the outer tube 5 protects the inner tube 4 formed of aluminum from erosion (mechanical eating away) or corrosion (chemical eating away) caused by contact with seawater.

The outer tube 5 coats the inner tube 4 throughout the entire circumferential direction of the inner tube 4 as shown in FIG. 2 (a). The thickness thereof is largest at the apex portions of the fins 8, is smallest at the valley portion between each adjacent pair of fins 8, and continuously changes from the apex portions of the fins 8 to the valley portions. The specific thickness of the outer tube 5 is, for example, about 0.1 mm to 0.8 mm at the valley portions, and is larger than the thickness of the valley portions, for example, about 0.5 mm to 1.5 mm at the apex portions of the fins 8.

The thickness of the outer tube 5 is substantially constant along the longitudinal direction of the inner tube 4. That is to say, the thickness of the outer tube 5 at the apex portions of the fins 8 is substantially constant from one end to the other end of the inner tube 4, and the thickness of the outer tube 5 at the valley portions is also substantially constant from one end to the other end of the inner tube 4. Therefore, the thickness of the outer tube 5 between the apex portions of the fins 8 and the valley portions is also substantially constant from one end to the other end of the inner tube 4.

Such an outer tube 5 is metallically bonded to the inner tube 4 at the interface between itself and the inner tube 4, thereby being integrated.

The multi-layered fin tube 2 is formed by the above inner tube 4 and outer tube 5.

### (Second embodiment)

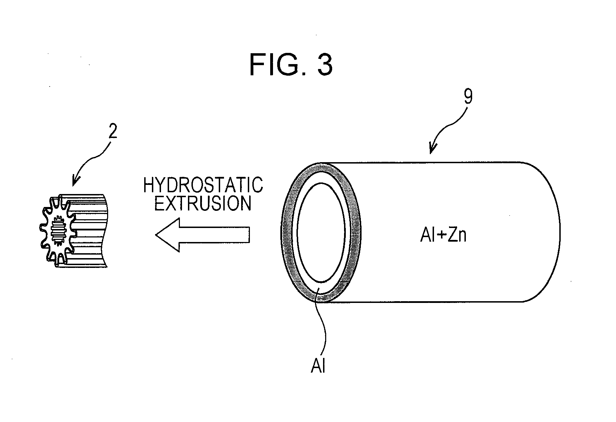

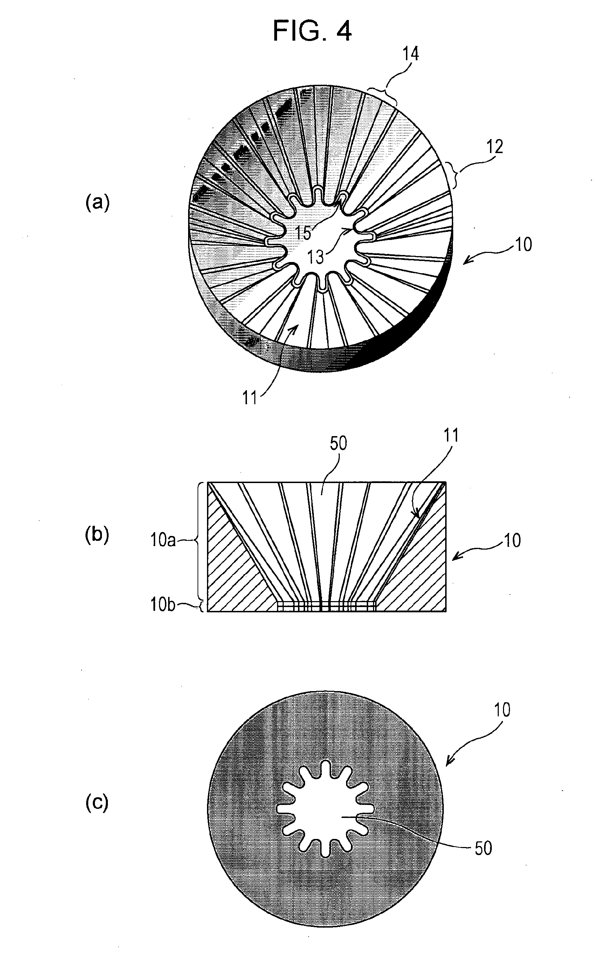

A second embodiment of the present invention will be described with reference to FIG. 3 and FIG. 4.

In this embodiment, a method for manufacturing the multi-layered fin tube 2 described in the first embodiment, and a forming device used in the manufacturing thereof will be described. FIG. 3 is a schematic view showing a method for manufacturing a multi-layered fin tube 2 according to the second embodiment. FIG. 4 (a) to FIG. 4 (c) are diagrams schematically showing a forming device used in the manufacturing of a multi-layered fin tube 2.

The outline of a manufacturing method of a multi-layered fin tube 2 will be described with reference to FIG. 3.

First, a cylindrical aluminum material is prepared as an inner tube material as a metal original material for forming the inner tube 4 of a multi-layered fin tube 2. A cylindrical aluminum alloy material that contains several percent (for example, 1 to 5%) zinc is prepared as an outer tube material as a metal original material for forming the outer tube 5 of a multi-layered fin tube 2. The external diameter of the inner tube material is equal or substantially equal to the internal diameter of the outer tube material. By combining the cylindrical aluminum alloy material (outer tube material) with the cylindrical aluminum material (inner tube material), a multi-layered tube material (billet) 9 is formed (see FIG. 3). Under a hydrostatic pressure, the multi-layered tube material 9 is inserted into a die (forming device) 10 having an approach and is extruded, and thereby a multi-layered fin tube 2 is formed. At this time, the groove structure in the inner side of the multi-layered fin tube 2 is formed by a mandrel (not shown). The die 10 having an approach will be described later.

The hydrostatic pressure used here is a predetermined isotropic pressure, for example, of 1000 MPa. Under this ultra-high pressure, the multi-layered tube material 9 is pressed. By this ultra-high isotropic pressure, the multi-layered tube material 9 is subjected to circumferential compression and plastically deformed, and is deformed into a desired shape by the die 10 having an approach. At this time, the inner tube 4 and the outer tube 5 in the multi-layered fin tube 2 after formation described in the first embodiment are metallically bonded to each other at the interface therebetween.

The die (forming device) 10 having an approach used in the above-described hydrostatic extrusion will be described with reference to FIG. 4 (a) to FIG. 4 (c).

FIG. 4 (a) is a perspective view of the die 10 having an approach viewed from a point above the approach surface 11. FIG. 4 (b) is a sectional view of the die 10 having an approach of FIG. 4 (a) viewed from the side. FIG. 4 (c) is a diagram showing the surface on the opposite side of the approach surface 11 in the die 10 having an approach of FIG. 4 (a). In the die 10 having an approach of FIG. 4 (a), the multi-layered tube material 9 is inserted toward the paper plane from the front.

As shown in FIG. 4 (b), the die 10 having an approach that is a forming device has an approach portion 10a and a die portion 10b. The die 10 having an approach is provided with an insertion hole 50 that penetrates the die 10 having an approach in the direction in which the approach portion 10a and the die portion 10b are arranged. The die 10 having an approach has an entrance side surface (the upper end face in FIG. 4 (b)) at the approach portion 10a side end thereof, and has an exit side surface (the lower end face in FIG. 4 (b)) at the die portion 10b side end thereof. On the entrance side surface, one end of the insertion hole 50 opens as an entrance side opening into which the multi-layered tube material 9 is inserted. On the exit side surface, the other end of the insertion hole 50 opens as an exit side opening from which the multi-layered tube material 9 comes out.

The insertion hole 50 has an entrance side portion located in the approach portion 10a, and an exit side portion located in the die portion 10b. The entrance side portion is continuous with the exit side portion at the die portion 10b side end thereof.

In the die portion 10b, part (the exit side portion) of the insertion hole 50 is formed. The exit side portion of the insertion hole 50 has the same shape as the opening on the exit side and extends in the insertion direction of the multi-layered tube material 9. The opening on the exit side has a shape corresponding to the outer shape of the multi-layered fin tube 2 (see FIG. 4 (c)).

The approach portion 10a has an approach surface 11 that forms part (the entrance side portion) of the insertion hole 50. The approach surface 11 is inclined with respect to the insertion direction of the multi-layered tube material 9, in a section passing through the central axis of the insertion hole 50. That is to say, since the area of the opening on the exit side of the die 10 having an approach is smaller than the area of the opening on the entrance side of the die 10 having an approach, the approach surface 11 connecting the opening on the entrance side and the exit side portion of the insertion portion 50 forms an inclined surface inclined at a predetermined angle to the insertion direction of the multi-layered tube material 9, in the section shown in FIG. 4 (b).

Here, in the die 10 having an approach, the opening on the entrance side is circular, and the opening on the exit side (the opening surrounded by the die portion 10b) has a shape corresponding to the outer shape of the multi-layered fin tube 2. The approach surface 11 is a surface connecting the opening on the entrance side and the exit side portion of the insertion hole 50, and the shape of the approach surface 11 changes from the opening on the entrance side toward the exit side portion of the insertion hole 50 such that the outer shape of the cylindrical multi-layered tube material 9 inserted into the insertion hole 50 finally becomes the outer shape of the multi-layered fin tube 2. That is to say, like the die 10 having an approach shown in FIG. 4 (a), the shape of the approach surface 11 (specifically, the shape of a section perpendicular to the insertion direction of the multi-layered tube material 9) continuously changes, toward the insertion direction of the multi-layered tube material 9, from a substantially circular shape to a shape corresponding to the outer shape of the multi-layered fin tube 2.

The details will be described with reference to FIG. 4 (a). For example, the approach surface 11 has such a shape that a circular entrance-side end portion continuously changes toward the opening on the exit side and recesses and protrusions are repeated in the circumferential direction at the exit-side end portion. Specifically, in the approach surface 11, first parts and second parts extending from the entrance-side end portion toward the opening on the exit side are arranged alternately in the circumferential direction. Each first part has a recessed shape at the entrance-side end portion 12 thereof, reverses the curving direction while continuously changing the curvature radius of the curved surface toward the opening on the exit side, and has a protruding shape at the exit-side end portion 13. Specifically, each first part reverses the curving direction by increasing the curvature radius from the entrance-side end portion 12 having a recessed shape, then reduces the curvature radius, and has a protruding shape at the exit-side end portion 13.

On the other hand, each second part has a recessed shape at the entrance-side end portion 14 thereof, continuously changes the curvature radius of the curved surface toward the opening on the exit side, and has a recessed shape deeper than the entrance-side end portion at the exit-side end portion 15.

When extrusion is performed under an ultra-high hydrostatic pressure using the above-described die 10 having an approach having the approach surface 11 that is inclined at a predetermined angle to the insertion direction of the multi-layered tube material 9 and whose sectional shape continuously changes from the opening on the entrance side to the opening on the exit side, the multi-layered tube material 9 flows smoothly through the die 10 having an approach. Thus, dead zones where the material does not flow as in the extrusion using a conventional flat die are prevented from occurring.

As described above, the multi-layered fin tube 2 is formed without the stagnation of Al-Zn alloy that forms a sacrificial anode coating in the die 10 having an approach. Thus, the thickness of the outer tube 5 at the fin apex portions is substantially constant from one end to the other end of the inner tube 4, and the thickness of the outer tube 5 at the valley portions is also substantially constant from one end to the other end of the inner tube 4. The thickness of the outer tube 5 between the apex portions of the fins 8 and the valley portions is also substantially constant from one end to the other end of the inner tube 4. In this way, the multi-layered fin tube 2 according to the first embodiment is manufactured.

If the angle of the approach surface 11 with respect to the insertion direction of the multi-layered tube material 9 changes, the thickness of the outer tube 5 in the multi-layered fin tube 2 (the thickness of the valley portions and the thickness of the fin apex portions) changes. For example, the smaller the angle of the approach surface 11 with respect to the insertion direction of the multi-layered tube material 9 (that is, the closer to parallel to the insertion direction of the multi-layered tube material 9), the larger the thickness of the outer tube 5 at the valley portions, and the smaller the difference from the thickness of the outer tube 5 at the fin apex portions. The larger the angle of the approach surface 11 with respect to the insertion direction of the multi-layered tube material 9 (that is, the closer to perpendicular to the insertion direction of the multi-layered tube material 9), the smaller the thickness of the outer tube 5 at the valley portions, and the larger the difference from the thickness of the outer tube 5 at the fin apex portions. When the angle of the approach surface 11 with respect to the insertion direction of the multi-layered tube material 9 exceeds a certain value, the outer tube 5 is hardly formed at the valley portions.

### (Third embodiment)

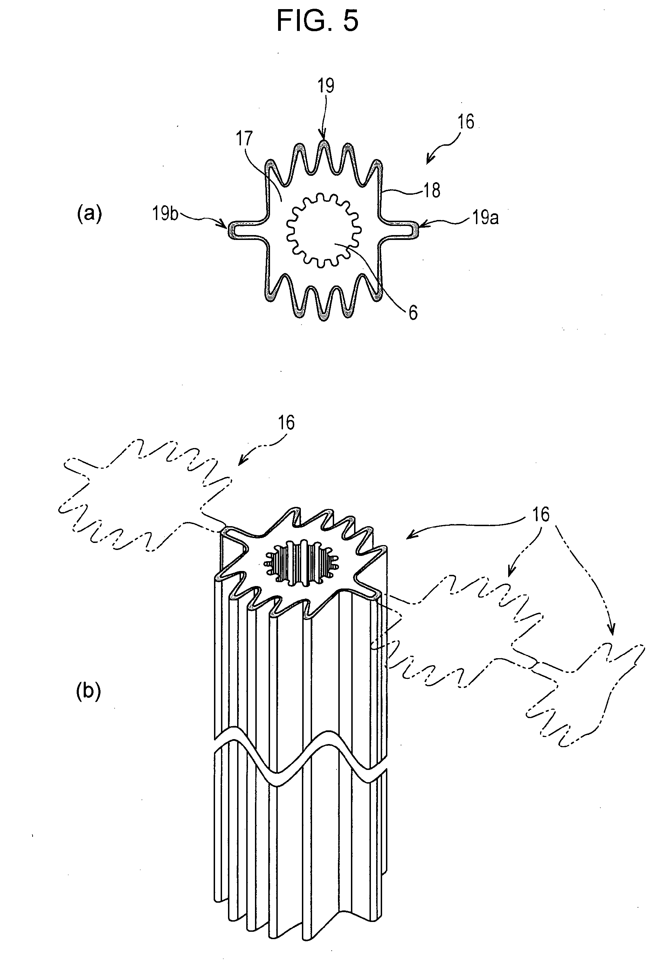

A modification of the above-described multi-layered fin tube (multi-layered heat transfer tube) 2 according to the first embodiment will be described in detail with reference to FIG. 5 (a) and FIG. 5 (b). FIG. 5 (a) is a sectional view of a multi-layered fin tube 16 according to this modification taken along a plane perpendicular to the axis. FIG. 5 (b) is a perspective view showing the whole multi-layered fin tube 16.

As with the multi-layered fin tube 2 in the first embodiment, the multi-layered fin tube 16 is a substantially cylindrical hollow tube having a length, for example, of 4 to 6 m, and has a substantially cylindrical inner tube 17 as a base material that forms the main body of the multi-layered fin tube 16, and an outer tube 18 as a coating material that coats the entire outer peripheral surface of the inner tube 17. The inner tube 17 is formed, for example, of metallic aluminum, and the outer tube 18 is formed of aluminum alloy that contains several percent (for example, 1 to 5%) zinc. The outer tube 18 is metallically bonded to the outer peripheral surface of the inner tube 17, thereby coating the inner tube 17.

The multi-layered fin tube 16 according to this embodiment has about the same configuration as the multi-layered fin tube 2 in the first embodiment, but is different in the shape of fins 19 formed on the outer peripheral surface. The shape of the fins 19 of the multi-layered fin tube 16 according to this embodiment will be described below.

With reference to FIG. 5 (a), of the plurality of protruding fins 19 provided on the outer peripheral surface of the multi-layered fin tube 16 according to this embodiment, the fin 19a and the fin 19b located on the opposite sides of the through-hole 6 have apex portions protruding from the center of the through-hole 6 of the inner tube 17 toward the outside in opposite directions. The fin 19a and the fin 19b both have a flat apex portion.

The apex portions of the other fins 19 face directions almost perpendicular to the above protruding directions of the fin 19a and the fin 19b. In FIG. 5 (a), five fins 19 are formed with their apex portions facing upward in the paper plane, and five other fins 19 are formed with their apex portions facing downward in the paper plane. In the sectional shape shown in FIG. 5 (a), the multi-layered fin tube 16 is symmetric in the top-bottom direction and is also symmetric in the left-right direction. That is to say, the multi-layered fin tube 16 has a pair of fins 19a and 19b protruding in opposite directions, and the other fins 19 protrude in directions perpendicular to the pair of fins 19a and 19b. The ten fins 19 other than the fin 19a and the fin 19b become thicker from the apex portion toward the valley portion, that is, are tapered.

The fins 19 having such a shape are formed along the longitudinal direction of the inner tube 17 from one end to the other end of the inner tube 17 almost linearly. The inner tube 17 is configured such that the thickness of the inner tube 17 from the inner peripheral surface to the valley portions is about the same as the height of the fins 19 defined as the distance from the apex portions of the fins 19 to the valley portions.

The configuration of the outer tube 18 of the multi-layered fin tube 16 that forms such fins 19 is about the same as that of the multi-layered fin tube 2 in the first embodiment. The thickness thereof is largest at the apex portions of the fins 19, is smallest at the valley portion between each adjacent pair of fins 19. The thickness of the outer tube 18 continuously changes from the apex portions of the fins 19 to the valley portions. The specific thickness of the outer tube 18 is, for example, about 0.1 mm to 0.8 mm at the valley portions, and is larger than the thickness of the valley portions, for example, about 0.5 mm to 1.5 mm at the apex portions of the fins 19.

The thickness of the outer tube 18 is substantially constant along the longitudinal direction of the inner tube 17. That is to say, the thickness of the outer tube 18 at the apex portions of the fins 19 is substantially constant from one end to the other end of the inner tube 17, and the thickness of the outer tube 18 at the valley portions is also substantially constant from one end to the other end of the inner tube 17. Therefore, the thickness of the outer tube 18 between the apex portions of the fins 19 and the valley portions is also substantially constant from one end to the other end of the inner tube 17.

Such an outer tube 18 is metallically bonded to the outer tube 18 at the interface between itself and the inner tube 17, thereby being integrated.

The multi-layered fin tube 16 is formed by the above inner tube 17 and outer tube 18.

### (Fourth embodiment)

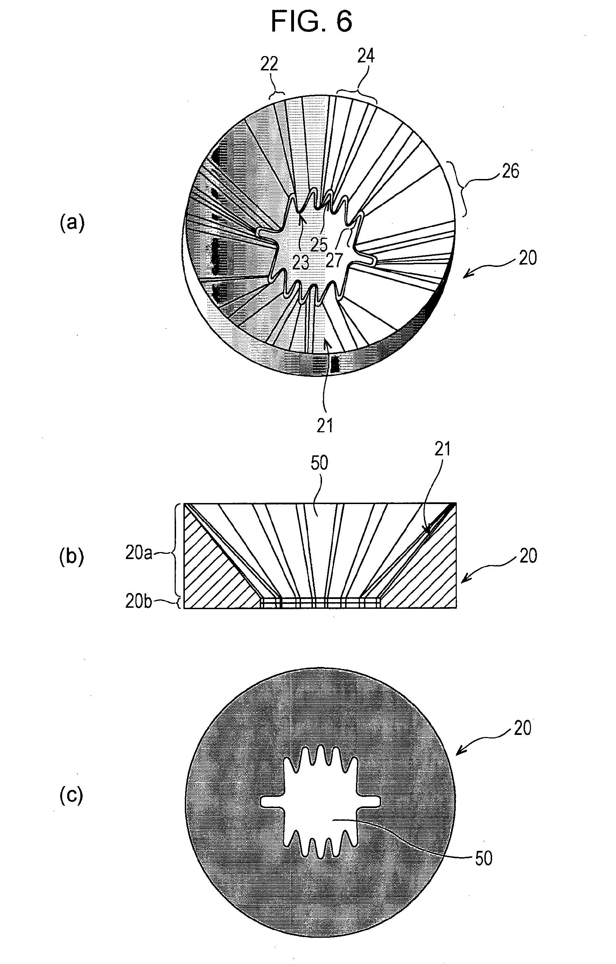

A fourth embodiment of the present invention will be described with reference to FIG. 6 (a) to FIG. 6 (c).

In this embodiment, a method for manufacturing the multi-layered fin tube 16 described in the third embodiment, and a forming device used in the manufacturing thereof will be described.

First, a die (forming device) 20 having an approach used in the manufacturing of the multi-layered fin tube 16 will be described with reference to FIG. 6 (a) to FIG. 6 (c). FIG. 6 (a) is a perspective view of the die 20 having an approach viewed from a point above the approach surface 21. FIG. 6 (b) is a sectional view of the die 20 having an approach of FIG. 6 (a) viewed from the side. FIG. 6 (c) is a diagram showing the surface on the opposite side of the approach surface 21 in the die 20 having an approach of FIG. 6 (a).

The die 20 having an approach according to this embodiment has about the same configuration as the die 10 having an approach described in the second embodiment. As shown in FIG. 6 (b), the die 20 having an approach has an approach portion 20a and a die portion 20b. The die 20 having an approach is provided with an insertion hole 50 that penetrates the die 20 having an approach in the direction in which the approach portion 20a and the die portion 20b are arranged. The die 20 having an approach has an entrance side surface (the upper end face in FIG. 6 (b)) at the approach portion 20a side end thereof, and has an exit side surface (the lower end face in FIG. 6 (b)) at the die portion 20b side end thereof. On the entrance side surface, one end of the insertion hole 50 opens as an entrance side opening into which the multi-layered tube material 9 is inserted. On the exit side surface, the other end of the insertion hole 50 opens as an exit side opening from which the multi-layered tube material 9 comes out.

The insertion hole 50 has an entrance side portion located in the approach portion 20a, and an exit side portion located in the die portion 20b. The entrance side portion is continuous with the exit side portion at the die portion 20b side end thereof.

The die portion 20b forms part (the exit side portion) of the insertion hole 50. The exit side portion of the insertion hole 50 has the same shape as the opening on the exit side and extends in the insertion direction of the multi-layered tube material 9. The opening on the exit side has a shape corresponding to the outer shape of the multi-layered fin tube 2 (see FIG. 6 (c)).

The approach portion 20a has an approach surface 21 that forms part (the entrance side portion) of the insertion hole 50. The approach surface 21 is inclined with respect to the insertion direction of the multi-layered tube material 9, in a section passing through the central axis of the insertion hole 50. That is to say, since the area of the opening on the exit side of the die 20 having an approach is smaller than the area of the opening on the entrance side of the die 20 having an approach, the approach surface 21 connecting the opening on the entrance side and the exit side portion of the insertion hole 50 forms an inclined surface inclined at a predetermined angle to the insertion direction of the multi-layered tube material 9, in the section shown in FIG. 6 (b).

Here, in the die 20 having an approach, the opening on the entrance side is substantially circular, and the opening on the exit side (the opening surrounded by the die portion 20b) has a shape corresponding to the outer shape of the multi-layered fin tube 16. The approach surface 21 is a surface connecting the opening on the entrance side and the exit side portion of the insertion hole 50, and the shape of the approach surface 21 changes from the opening on the entrance side toward the exit side portion of the insertion hole 50 such that the outer shape of the cylindrical multi-layered tube material 9 inserted into the insertion hole 50 finally becomes the outer shape of the multi-layered fin tube 16. That is to say, like the die 20 having an approach shown in FIG. 6 (a), the shape of the approach surface 21 (specifically, the shape of a section perpendicular to the insertion direction of the multi-layered tube material 9) continuously changes, toward the insertion direction of the multi-layered tube material 9, from a substantially circular shape to a shape corresponding to the outer shape of the multi-layered fin tube 16.

The details will be described with reference to FIG. 6 (a) to FIG. 6 (c). For example, the approach surface 21 has such a shape that a circular entrance-side end portion continuously changes toward the opening on the exit side and recesses and protrusions are repeated in the circumferential direction at the exit-side end portion. Specifically, in the approach surface 21, first parts and second parts extending from the entrance-side end portion toward the opening on the exit side are arranged alternately in the circumferential direction. In the approach surface 21 of this embodiment, third parts extend at predetermined intervals in the circumferential direction. Each first part has a recessed shape at the entrance-side end portion 22 thereof, continuously changes the curvature radius of the curved surface toward the opening on the exit side, and has a protruding shape at the exit-side end portion 23. Specifically, each first part reverses the curving direction by increasing the curvature radius from the entrance-side end portion 22 having a recessed shape, then reduces the curvature radius, and has a protruding shape at the exit-side end portion 23.

On the other hand, each second part has a recessed shape at the entrance-side end portion 24 thereof, continuously changes the curvature radius of the curved surface toward the opening on the exit side, and has a recessed shape deeper than the entrance-side end portion at the exit-side end portion 25.

As shown in FIG. 6 (a), each third part has a recessed shape at the entrance-side end portion 26, continuously changes from an arc to a straight line toward the opening on the exit side, and has a linear shape at the exit-side end portion (linear portion) 27.

Even if the approach surface 21 including the surfaces that each change from the entrance-side end portion 26 having a recessed shape to the linear portion 27 is provided in the die 20 having an approach, the multi-layered tube material 9 flows smoothly through the die 20 having an approach when the multi-layered tube material 9 is inserted into the insertion hole 50, and dead zones where the material does not flow as in the extrusion using a conventional flat die do not occur.

In addition, by providing the linear portions 27, the protruding directions of the fins 19 can be made almost perpendicular to the protruding directions of the fin 19a and the fin 19b as shown in FIG. 5 (a) and FIG. 5 (b). Since the multi-layered fin tube 16 has the fin 19a and the fin 19b protruding in opposite directions, the joining of the fin 19a and the fin 19b between a plurality of multi-layered fin tubes 16 is facilitated, and as a result, the manufacturing of heat exchange panel 3 is facilitated.

A manufacturing method of a multi-layered fin tube 16 will be described. First, a rod-like (cylindrical) aluminum material is prepared as an inner tube material for forming the inner tube 17 of a multi-layered fin tube 16. A cylindrical aluminum alloy material that contains several percent (for example, 1 to 5%) zinc is prepared as an outer tube material for forming the outer tube 18 of a multi-layered fin tube. By combining the cylindrical aluminum alloy material with the cylindrical aluminum material, a multi-layered tube material 9 is formed (see FIG. 3). The multi-layered tube material 9 is placed under a hydrostatic pressure that is an ultra-high isotropic pressure, for example, of 1000 MPa (predetermined isotropic pressure), is inserted into the above-described die (forming device) 20 having an approach of this embodiment, and is extruded. Thus, the multi-layered fin tube 16 according to the third embodiment is obtained.

The presently disclosed embodiments are to be considered in all respects as illustrative and not restrictive. The scope of the invention is indicated by the appended claims rather than by the foregoing description, and all changes which come within the meaning and range of equivalency of the claims are therefore intended to be embraced therein.

For example, although in the above second embodiment and fourth embodiment, the dies 10 and 20 having approaches have the approach portions 10a and 20a and the die portions 10b and 20b, the dies 10 and 20 having approaches may have only parts corresponding to the approach portions. That is to say, the dies having approaches may have such a configuration that an approach surface (inclined surface) forms the entire insertion hole into which the multi-layered tube material 50 is inserted.

### [Summaries of embodiments]

The above embodiments are summarized as follows.

According to the above embodiments, a multi-layered heat transfer tube used in a liquefied gas vaporizer includes an inner tube having a flow path through which liquefied gas flows, and an outer tube covering the outer peripheral surface of the inner tube. The inner tube and the outer tube have a plurality of fins extending in the longitudinal direction of the multi-layered heat transfer tube and arranged in the circumferential direction of the multi-layered heat transfer tube, at least the outer tube is formed of a fully dense material, and the outer tube covers the entire outer surface of the inner tube and is metallically bonded to the inner tube.

By metallically bonding the outer tube and the inner tube to each other, the outer tube and the inner tube are firmly joined to each other, and therefore the outer tube is prevented from being detached from the inner tube. Therefore, the multi-layered heat transfer tube has improved eating-away resistance against seawater (heat carrier).

It is preferable that the outer tube be formed so as to have a thickness that is largest at the apex portions of the plurality of fins and is smallest at valley portions, and the thickness continuously change from the apex portions of the fins toward the valley portions.

When seawater is caused to flow along the surface of the multi-layered heat transfer tube for heat exchange with liquefied gas flowing through the inside, the amount of contact with seawater is larger and the wear is more significant at the apex portions than at the valley portions. By making the thickness of the outer tube larger at the apex portions than at the valley portions, the outer tube can be prevented from being worn and exposing the inner tube at the apex portions though the outer tube has a sufficient thickness at the valley portions.

It is preferable that the outer tube be formed so as to have a thickness that is substantially constant throughout the length from one end to the other end of the multi-layered heat transfer tube.

According to such a configuration, the heat transfer characteristics of the outer tube can be made constant.

It is preferable that the inner tube be formed of aluminum, and the outer tube be formed of an alloy of aluminum and zinc.

The outer tube containing the above alloy functions as a sacrificial anode coating, and improves the eating-away resistance of the multi-layered heat transfer tube.

According to the above embodiments, a manufacturing method of a multi-layered heat transfer tube includes the steps of preparing a multi-layered tube material including an inner tube material that is a metal material for forming an inner tube and an outer tube material that is a metal original material for forming an outer tube and that surrounds the inner tube material, and extruding or drawing the multi-layered tube material through a forming device under a predetermined hydrostatic pressure environment.

By just extruding or drawing a multi-layered tube material through a forming device under a predetermined hydraulic pressure environment, the shape of a multi-layered heat transfer tube can be formed while metallically bonding the inner tube and the outer tube to each other at the interface therebetween.

According to the above embodiments, a forming device for manufacturing a multi-layered heat transfer tube includes an approach portion in which an insertion hole is formed into which a multi-layered tube material is inserted, the multi-layered tube material including an inner tube material that is a metal original material for forming an inner tube and an outer tube material that is a metal original material for forming an outer tube and that surrounds the inner tube material, wherein the approach portion has an approach surface that forms at least part of the insertion hole and that is inclined at a predetermined angle with respect to the insertion direction of the multi-layered tube material, the exit side portion of the insertion hole has a shape corresponding to the sectional shape of the multi-layered heat transfer tube, the approach surface is such that the opening on the entrance side of the insertion hole is substantially circular, and the sectional shape perpendicular to the insertion direction continuously changes from the opening on the entrance side toward the exit side portion of the insertion hole, and the area of the opening on the exit side is smaller than the area of the opening on the entrance side.

According to such a configuration, by passing a multi-layered tube material through the through-hole, the outer peripheral surface of the multi-layered tube material is gradually narrowed by the approach surface as the multi-layered tube material moves through the through-hole, and the multi-layered tube material is formed into a desired shape (heat transfer tube shape) and is extruded (or drawn) from the opening on the exit side.

### Industrial Applicability

As described above, the multi-layered heat transfer tube according to the present invention is useful as a multi-layered heat transfer tube (fin tube) that is used in an open rack vaporizer (ORV) and in which the entire circumference of a base material is coated by a sacrificial anode coating, and is suitable to improve eating-away resistance against seawater (heat carrier).

## Claims

1. A multi-layered heat transfer tube used in a liquefied gas vaporizer, comprising:
an inner tube having a flow path through which liquefied gas flows; and
an outer tube covering the outer peripheral surface of the inner tube,
wherein the inner tube and the outer tube have a plurality of fins extending in the longitudinal direction of the multi-layered heat transfer tube and arranged in the circumferential direction of the multi-layered heat transfer tube,
at least the outer tube is formed of a fully dense material, and
the outer tube covers the entire outer surface of the inner tube and is metallically bonded to the inner tube.

2. The multi-layered heat transfer tube according to Claim 1, wherein the outer tube is formed so as to have a thickness that is largest at the apex portions of the plurality of fins and is smallest at valley portions, and
the thickness continuously changes from the apex portions of the fins toward the valley portions.

3. The multi-layered heat transfer tube according to Claim 1, wherein the outer tube is formed so as to have a thickness that is substantially constant throughout the length from one end to the other end of the multi-layered heat transfer tube.

4. The multi-layered heat transfer tube according to Claim 3, wherein the inner tube is formed of aluminum, and
the outer tube is formed of an alloy of aluminum and zinc.

5. A manufacturing method of the multi-layered heat transfer tube according to any one of Claims 1 to 4, comprising the steps of:
preparing a multi-layered tube material including an inner tube material that is a metal original material for forming the inner tube and an outer tube material that is a metal original material for forming the outer tube and that surrounds the inner tube material; and
extruding or drawing the multi-layered tube material through a forming device under a predetermined hydrostatic pressure environment.

6. A forming device for manufacturing the multi-layered heat transfer tube according to any one of Claims 1 to 4,
the forming device comprising an approach portion in which an insertion hole is formed into which a multi-layered tube material is inserted, the multi-layered tube material including an inner tube material that is a metal original material for forming the inner tube and an outer tube material that is a metal original material for forming the outer tube and that surrounds the inner tube material,
wherein the approach portion has an approach surface that forms at least part of the insertion hole and that is inclined at a predetermined angle with respect to the insertion direction of the multi-layered tube material,
the exit side portion of the insertion hole has a shape corresponding to the sectional shape of the multi-layered heat transfer tube,
the approach surface is such that the opening on the entrance side of the insertion hole is substantially circular, and the sectional shape perpendicular to the insertion direction continuously changes from the opening on the entrance side toward the exit side portion of the insertion hole, and
the area of the opening on the exit side is smaller than the area of the opening on the entrance side.
